# EUROPEAN PATENT SPECIFICATION

(11) **EP 4 084 944 B1**
(45) Date of publication and mention of the grant of the patent: **30.08.2023**
(21) Application number: 20835823.4
(22) Date of filing: 21.12.2020
(51) Int. Cl.: B29C 64/118, B29C 64/393, B33Y 10/00, B33Y 80/00, F21K 9/90

(54) **OPTICAL EFFECTS OF 3D PRINTED ITEMS**
OPTISCHE EFFEKTE VON 3D-GEDRUCKTEN ELEMENTEN
EFFETS OPTIQUES D'ARTICLES IMPRIMÉS EN 3D

(30) Priority: 03.01.2020 EP 20150205
(43) Date of publication of application: 09.11.2022
(73) Proprietor: Signify Holding B.V., 5656 AE Eindhoven (NL)
(72) Inventor: GOMMANS, Hendrikus, Hubertus, Petrus, 5656 AE Eindhoven (NL); VAN OS, Jacobus, Petrus, Johannes, 5656 AE Eindhoven (NL); HIKMET, Rifat, Ata, Mustafa, 5656 AE Eindhoven (NL); LEE, Wei, Pien, 5656 AE Eindhoven (NL)
(74) Representative: Verweij, Petronella Daniëlle
(86) International application number: PCT/EP2020/087514
(87) International publication number: WO 2021/136716

(56) References cited:
- WO-A1-2018/224395
- WO-A1-2018/224395
- CN-A- 110 271 183
- CN-A- 110 271 183
- US-A1- 2016 107 382
- US-A1- 2016 107 382
- US-A1- 2018 126 620
- US-A1- 2018 169 953
- US-A1- 2019 275 733

## Description

### FIELD OF THE INVENTION

The invention relates to a method for manufacturing a 3D (printed) item. Further, the invention relates to a computer program product for executing such method. The invention also relates to the 3D (printed) item obtainable with such method. Further, the invention relates to a lighting device including such 3D (printed) item.

### BACKGROUND OF THE INVENTION

Varying of a deposition rate is known in the art. US20130095302, for instance describes a process wherein during the extrusion, the deposition rate may be varied according to, e.g., a periodic square wave or similar step function of any desired duty cycle to obtain a surface that includes periodic protrusions. These protrusions may be staggered from layer to layer of a fabrication process so that corresponding ridges are oriented diagonally along a surface of a completed object.

WO-2018/224395 discloses a method for producing a 3D item by means of fused deposition modelling. In this method, a stack of layers of a 3D printed material is generated by layer-wise depositing an extrudate from 3D printable material. The generated layer stack has layers of a core-shell configuration wherein the core portion is made of a first material and the shell portion is made of a second material, and wherein the first material and the second material have a different transmissivity. The generated layer stack may consist exclusively of layers of a core-shell configuration, or it may consist of a combination of layers with a core-shell configuration and layers that only contain a core portion. In both cases, the core portions of different layers may have different dimensions.

CN 110 271 183 A discloses a three-dimensionally shaped article production method for producing a three-dimensionally shaped article by stacking a layer, and includes: ejecting a curable ink containing a UV curable resin, thereby forming the layer; irradiating the ejected curable ink with an ultraviolet ray; and flattening the layer by removing at least a part of the layer.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

It appears that there is a desire to provide 3D printed items which show optical effects, such as under daylight illumination and/or or artificial light illumination. It appears that 3D printing methods that are known from the prior art do not have such functionality and may also not (easily) allow controlling such functionality. Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

Amongst others, herein in embodiments a 3D printing method in vase (aka spiral) mode is proposed that may create layer height variations in both z and circumferential direction that in turn may result in an omnidirectional depth perception in reflection for an otherwise (essentially) perfectly plane surface illuminated by ambient lighting, while it also can have impact the perception of how the active illumination from the inside when turned on. Further, amongst others it is herein suggested in embodiments to use fused deposition modelling where the height of the deposited layer can be changed during printing. For example, layer height during the printing of each layer can change about a sinus function. When multiple layers are printed where the relative height change increases, a wavy edge of the print may be realized which can be very decorative and/or which may provide optical effects, like transparency, refraction, reflection, differences in transparencies, translucency, and differences in translucency, lenslet function, etc.. In embodiments, when printing continues and relative height change during printing may be decreased to reach a level that during printing no height change takes place. Amongst others, in this way structures showing lens working can be realized. In embodiments, it may also possible to use other functions such as saw tooth, or yet other functions. In this way, it may also possible to produce e.g. lamp shades with edges according to the function used such as wavy, saw teeth or triangular. The printed object does not necessarily to have straight surfaces, but their surface can be conical, spherical or have bents, etc. It goes without saying that it is also possible to use height variation only in certain parts of the print while the rest of the object is printed using a constant layer height.

Hence, in a first aspect the invention, as disclosed in claim 1, provides a method for producing a 3D item, especially by means of fused deposition modelling. In embodiments, the method comprises a 3D printing stage, which may in embodiments comprise layer-wise depositing an extrudate from 3D printable material. Thereby, the 3D item comprising 3D printed material may be provided, especially on a receiver item. Especially, the 3D item comprises a plurality of layers of 3D printed material. Each layer may have a layer height (H) and a layer width (W). Especially, the 3D printing stage may comprise generating a stack of the layers of the 3D printed material, wherein each layer of the stack has a non-constant layer height (H), wherein at a fixed first x,y-position the layer height (H) is varied layer by layer for a subset of a total number of layers, wherein either (i) the layer height (H) increases for consecutive layers or (ii) the layer height (H) decreases for consecutive layers. Especially, in embodiments either (i) the layer height (H) increases for (a first set of) consecutive layers and then the layer height (H) decreases for (a second set of) consecutive layers, or (ii) the layer height (H) decreases for (a first set of) consecutive layers and then the layer height (H) increases for (a second set of) consecutive layers. Further, in specific embodiments at least part of the 3D printable material comprises light transmissive polymeric thermoplastic material.

Hence, especially the invention provides in embodiments a method for producing a 3D item by means of fused deposition modelling using a 3D printer, the method comprising a 3D printing stage during which a stack of layers of a 3D printed material is generated by layer-wise depositing an extrudate from 3D printable material, at least part of the 3D printable material comprising a light transmissive polymeric thermoplastic material, wherein each layer of the layer stack has a non-constant layer height (H), and wherein at a fixed first x,y-position (i) the layer height (H) increases for consecutive layers and then the layer height (H) decreases for consecutive layers, or (ii) the layer height (H) decreases for consecutive layers and then the layer height (H) increases for consecutive layers.

The present invention, as disclosed in claim 8, provides 3D items wherein a depth impression using monocular cues is provided. Further, it may in this way be possible to create 3D items for example showing light refraction and reflection effects such as with lens function (or lenslet function) and/or other optical properties. Such item may e.g. be part of a luminaire. For instance, such item may be used to provide a decorative light distribution. With the present invention, it may be possible to provide substantially planar surfaces which nevertheless appear curved.

As indicated above, the invention provides a method for producing a 3D item by means of fused deposition modelling. Specific embodiments are further also specified below. The term "3D item" may also refer to a part of an item or a part of 3D printed object. Especially, the method comprises a 3D printing stage comprising layer-wise depositing an extrudate from 3D printable material, to provide the 3D item comprising 3D printed material. The 3D printable material is provided (as effectively 3D printed material) on a receiver item (or on 3D printed material on such receiver item (and thus effectively on the receiver item)).

Especially, the 3D item comprises a plurality of layers of 3D printed material. Hence, the method may include layer-wise depositing a plurality of layers, especially on top of each other. Each layer has a layer height (H) and a layer width (W). In general, the layer height may be constant. In the present invention, however, there are parts of the 3D printed item where the layer height is varied. Hence, in specific embodiments the layer height may vary over the layer. This may apply for at least part of the layers. Hence, a single layer may have different layer heights over the length of the layer. Further, different layers may have different layer heights. Different layers may also have identical layer heights. Especially, there may be a subset of layers where the layer height is not constant in a z-direction. In general, the layer width may be constant. In the present invention, however, it may be chosen to vary also the layer width, or keep the layer width constant.

As indicated above, especially the 3D printing stage comprises generating a stack of the layers of the 3D printed material. As indicated above, in general the layers may have essentially the same width and height. In the present invention, however, a plurality of the layers within the stack may have a non-uniform height. More especially, the nonuniformity may be such that within part of the stack the layer height increases with increasing number of layers or decreases with decreasing number of layers. The 3D item may comprise a single stack. However, the 3D item may also comprise a plurality of stacks. Further, a stack may also comprise a plurality of (smaller) stacks or stack parts ("parts").

Hence, in embodiments the layer height (H) may increase for consecutive layers. This may imply that for a plurality of layers within the stack, the layer height increases in the z-direction. This increase may be continuous, in the sense that for each consecutive layer, the layer height increases. However, it may also be possible that in average the layer height increases. This increase is especially a local increase. Hence, at a first x,y-position the layer height may increase in the z-direction, whereas at a second x,y-position the layer height may be essentially constant in the z-direction.

Alternatively or additionally, in embodiments the layer height (H) may decrease for consecutive layers. This may imply that for a plurality of layers within the stack, the layer height decreases in the z-direction. This decrease may be continuous, in the sense that for each consecutive layer, the layer height decreases. However, it may also be possible that in average the layer height decreases. This decrease is especially a local decrease. Hence, at a first x,y-position the layer height may decrease in the z-direction, whereas at a second x,y-position the layer height may be essentially constant in the z-direction.

Hence, the phrase "increases for consecutive layers", and similar phrases, may imply that for a subset of the layers at a specific x,y position the layer height increases for the subset of layers. This may imply that there are at least two layers having different layer heights at the specific x,y position, especially at least three layers, yet more especially a total number of layer selected from the range of 3-20. The layer height may increase for each layer. However, in other embodiments the increase may be per two or more layers. Hence, in embodiments there is a stack which comprises one or more parts ("stack parts") where the layer height increases for a respective subset of layers.

Likewise, the phrase "decrease for consecutive layers", and similar phrases, may imply that for a subset of the layers at a specific x,y position the layer height decreases for the subset of layers. This may imply that there are at least two layers having different layer heights at the specific x,y position, especially at least three layers, yet more especially a total number of layer selected from the range of 3-20. The layer height may decrease for each layer. However, in other embodiments the decrease may be per two or more layers. Hence, in embodiments there is a stack which comprises one or more parts where the layer height decrease for a respective subset of layers.

In general, when there is a part where the layer height increases, there may also be (an adjacent) part where the layer height decrease in the same direction (or increase in opposite direction).

In embodiments, within a stack there may be at a first position a variation (like an increase) in the layer height. In further embodiments, within the same stack there may be at a second position a same or different variation in the layer height. For instance, within the same stack there may be at a second position a different variation (like a decrease) in the layer height. Alternatively or additionally, adjacent to the first position, there may be an essentially constant layer height.

In embodiments, the increase may be essentially parallel to the z-direction. In yet other embodiments, the increase may be under an angle (smaller than 90°, such as equal to or smaller than 45°) to the z-direction. Likewise, in embodiments the decrease may be essentially parallel to the z-direction. In yet other embodiments, the decrease may be under an angle (smaller than 90°, such as equal to or smaller than 45°) to the z-direction.

Hence, in embodiments the 3D printing stage may comprise generating a stack of the layers of the 3D printed material, wherein at a fixed first x,y-position the layer height (H) is varied layer by layer for a subset of a total number of layers, wherein either (i) the layer height (H) increases for consecutive layers or (ii) the layer height (H) decreases for consecutive layers. Of course, as indicated above a stack may also comprise two (or more) parts where at one part the layer height increases (for two or more of the consecutive layers) and another part where part the layer height decreases (for two or more of the consecutive layers). Hence, in embodiments for the same subset of layers or for different subsets of layers may apply that there is a part where the layer height increases and/or a part where the layer height decreases. Increase or decrease is in general defined in the z-direction (i.e. perpendicular to a x,y plane), even when the increase or decrease is under an angle to the z-direction (but may have a component parallel to the z-direction).

Especially, differences in height between two consecutive layers is not more than about 2.5 mm, such as selected from the range of 0. 1-2.0 mm. At positions when there is no height change, the differences in height between two consecutive layers may thus essentially be about 0.0 mm.

When varying the layer height locally, this may imply that the height of the 3D item may vary locally. This may in embodiments be desirable. However, other embodiments are also possible (see further below).

When layer heights are varied over a number of layers within the stack, there may be different total heights in the stack. Hence, in embodiments the stack may have a first stack height (H11) at the fixed first x,y position, wherein the method comprises generating (adjacently) at a fixed second x,y-position the stack with layers having a layer height (H), thereby providing the stack with a second stack height (H12) at the fixed second x,y position, wherein 0.1≤H12/H11≤10, such as 0.1≤H12/H11≤5, like 0.2≤H12/H11≤5, with in embodiments at least 0.1≤H12/H11≤1.5. Hence, adjacent to a relatively high part or low part of the stack, with a first stack height, there may be a relatively low part or low part of the stack, respectively, with a second stack height. The terms "first stack height" and "second stack height" may especially refer to heights of the same stack. Such stack may especially share the same layers. Hence, a lowest layer and a highest layer of the stack will define the stack height. This stack height may vary over the stack (length), thought this stack height may also be essentially constant over the stack length (see further below). Hence, in embodiments the stack may have a plurality of different stack heights.

However, in other embodiments such height differences may be undesirable. Hence, in embodiments it may be desirable to compensate for an increasing or decreasing layer height at the first x,y-position. This may be done by adding a plurality of layers at the first x,y-position with decreasing or increasing layer height, respectively. Hence, in specific embodiments at a fixed first x,y-position the layer height (H) may be varied layer by layer for a subset of a total number of layers, wherein either (i) the layer height (H) increases for consecutive layers and then the layer height (H) decreases for consecutive layers, or (ii) the layer height (H) decreases for consecutive layers and then the layer height (H) increases for consecutive layers.

Especially, in embodiments the height between different parts of such stack may be relatively small. Hence, in embodiments the stack may have a first stack height (H11) at the fixed first x,y position, wherein the method comprises generating (adjacently) at a fixed second x,y-position the stack with layers having an essentially constant layer height (H), thereby providing the stack with a second stack height (H12) at the fixed second x,y position, wherein 0.9≤H12/H11≤1.1. Hence, adjacent to a first part of the stack, with a first stack height, there may be another part of the stack, respectively, with a second stack height, which heights may be essentially the same. Hence, in (other) embodiments the stack may have a plurality of essentially the same heights (essentially uniform height of the stack).

In specific embodiments, at least part of the 3D printable material (and thus at least part of the 3D printed material) may comprise light transmissive polymeric thermoplastic material. This may essentially facilitate optical effects like differences in transmission, translucency, lenslet function, etc.. When e.g. light transmissive material is applied, parts where the height is larger may be perceived more transparent than parts with lower layer heights. Hence, by locally controlling the layer height optical effects may be introduced. See further also below.

As indicated above, within a stack there may be at a first position a variation in the layer height, whereas at another position, adjacent to the first position, there may be an essentially constant layer height.

In embodiments a layer from the stack has a maximum overall height (H_{L1}) of the layer in the stack, wherein the method comprises generating (adjacently) the same layer with a minimum overall height (H_{L2}) of the layer in the stack, wherein |H_{L1}- H_{L2}|/L^{∗}≤1, where L* is a distance between these two points measured along a surface of the 3D item, especially parallel to the layers. Would the value be larger, quality of the 3D printing may decrease as the inclination angle may be too high. The phrase "parallel to the layers" may in general also be interpreted as parallel to a receiver item. Also, the phrase "parallel to the layers" may in general also be interpreted as parallel to an x,y plane. Therefore, the term "overall height" may especially refer to a height of the layer determined relative to an x-y plane. Hence, in specific embodiments a layer from the stack has a maximum overall height (H_{L1}), wherein the method comprises generating the same layer with a minimum overall height (H_{L2}) of that layer in the stack, wherein |H_{L1}- H_{L2}|/L^{∗}≤1, where L* is a distance between these two points measured parallel to an x,y-plane. Further, in specific embodiments, stacks may be provided wherein values between minima and (adjacent) maxima are achieved selected from the range of 0.1≤|H_{L1}- H_{L2}|/L^{∗}≤1, such as 0.25≤|H_{L1}- H_{L2}|/L^{∗}≤0.8. For instance, a layer in a stack part may have a maximum overall height (H_{L1}) and a minimum overall height (H_{L2}) of the layer in the stack, wherein 0.1≤|H_{L1}- H_{L2}|/L^{∗}≤1.

A plurality of structures may be applied, for instance in the same stack. Hence, plurality of minima and maxima may be available. They may be available in a specific pattern. Hence, in embodiments the method may comprise 3D printing a plurality of maximum overall heights (H_{L1}) and minimum overall heights (H_{L2}) in the stack, where the maximum overall heights (H_{L1}) and minimum overall heights (H_{L2}) of each layer follow a spiral on a surface of the 3D item. Hence, in embodiments the 3D item may comprises a plurality of maximum overall heights (H_{L1}) and minimum overall heights (H_{L2}) in the stack, where the maximum overall heights (H_{L1}) and minimum overall heights (H_{L2}) of each layer follow a spiral on a surface of the 3D item. In embodiments, the item, such as especially the stack, may comprise a plurality of stack parts which may be configured in a regular pattern. Especially, such stack parts comprise at least a single layer with a maximum overall height (H_{L1}) and a minimum overall height (H_{L2}) of the layer in the stack, wherein 0.1≤|H_{L1}-H_{L2}|/L^{∗}≤1.

When the layer height is increased or decreased, one may adapt, partly adapt, or not adapt the 3D printing volumetric flow rate of the 3D printable material and/or the printing speed in order to compensate or at least partly compensate for the more or respectively less use of 3D printable material. However, one may also not adapt. Hence, in embodiments the layer width may be kept constant, or may at least partly increase when the layer height is decreased or at least partly decrease when the layer height is increased.

Hence, in specific embodiments the method may comprise printing the layers for the subset of a total number of layers at the fixed first x,y position with a constant layer width (W). This may be useful for avoiding surface relief formation and/or for obtaining optical effect solely due to layer thickness variation. In yet other embodiments, the volume printed per time unit as well the printing speed may be essentially kept constant. This may be a relatively easy solution. Hence, in embodiments the method comprises printing the layers where for the subset of a total number of layers at the fixed first x,y position a cross-sectional area of the layers is constant. Also a hybrid solution may be chosen, wherein the width decrease less than without compensation, but is not constant. By choosing the widths, one may also compensate for possible stress.

Hence, in embodiments the invention also provides a method that may comprise varying the layer height (within a winding) while remaining the wall thickness constant. The term "winding" may refer to a (single) layer.

As indicated above, at the first position for a number of layers in the z direction the layer height may increase or may decrease, or may first increase or decrease and then decrease or increase, respectively. Here, the term "first" may indicate measured from e.g. the receiver item (as an embodiment of an x,y plane). The increase and/or decrease may in embodiments be constant. In such embodiments, with a constant step the layer height is increased or decreased. Especially, however, the increase and/or decrease may be gradually. In such embodiments, the increase or decrease may increase or decrease layer by layer. In specific embodiments, the method may comprise printing the layers for the subset of a total number of layers at the fixed first x,y-position with layer heights (H) that vary sinusoidally or triangularly. For instance, in embodiments the method may comprise printing the layers for the subset of a total number of layers at the fixed first x,y-position with layer heights (H) that vary like a sawtooth. Especially, in embodiments the method may comprise printing the layers for the subset of a total number of layers at the fixed first x,y-position with stack heights that vary along the surface of the object gradually according to a mathematical function such as sinusoidally or triangularly.

Therefore, in specific embodiments the method may comprise printing the layers for the subset of a total number of layers at the fixed first x,y-position with layer heights (H) that vary according to a mathematical function selected from the group consisting of sinusoidally, triangularly, saw tooth, and square, or a combination of two or more of these. In yet further specific embodiments, the method may comprise printing the layers for the subset of a total number of layers at the fixed first x,y-position with layer heights (H) that vary according to a mathematical function selected from the group consisting of sinusoidally or triangularly, saw tooth, square, combinations of these wave forms but also modulated of waves (e.g. sine wave with a short wavelength modulated by a sine wave with a longer wavelength or sine wave modulated by a square wave), etc..

Hence, in specific embodiments the layer height may be varied, according to, e.g., a periodic square wave or similar step function of any desired duty cycle, to obtain a surface that includes periodic shapes (essentially in the plane of the surface). Alternatively or additionally, layer heights may be varied in a helical way or a spiral way, etc.

Below, some embodiments are described in relation to the 3D item. In specific embodiments, the method may comprise printing a hollow 3D item. In further specific embodiments, the method may comprise printing a concave 3D item. Further, especially the part with increasing and/or decreasing layer height is single-walled. This may especially allow the above described optical effects. Hence, in embodiments the 3D item may comprise one or more walls having the width of the layer(s). Or, in other words the widths of one or more walls of a 3D item may be defined by the width of single layers (which are especially available in one or more stacks).

Further, additional optical effects may be provided by including colored and/or reflective material in the 3D printable material. Hence, in specific embodiments the light transmissive polymeric thermoplastic material may in specific embodiments comprise particulate reflective material embedded therein (see further also below).

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Essentially, the materials are the same material, as the thermoplastic material upstream of the printer head, downstream of the printer head, and when deposited, is essentially the same material.

Herein, the term "3D printable material" may also be indicated as "printable material. The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures, and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention thus provides a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc.. Optionally, the 3D printable material comprises a 3D printable material selected from the group consisting of Urea formaldehyde, Polyester resin, Epoxy resin, Melamine formaldehyde, thermoplastic elastomer, etc... Optionally, the 3D printable material comprises a 3D printable material selected from the group consisting of a polysulfone. Elastomers, especially thermoplastic elastomers, are especially interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-l-pentene and 1-octadecene.

In specific embodiments, the 3D printable material (and the 3D printed material) comprise one or more of polycarbonate (PC), polyethylene (PE), polypropylene (PP), polyethylene naphthalate (PEN), styrene-acrylonitrile resin (SAN), polysulfone (PSU), polyphenylene sulfide (PPS), and semi-crystalline polytethylene terephthalate (PET), poly(methyl methacrylate) (PMMA), polystyrene (PS), and styrene acrylic copolymers (SMMA), and polyurethane(PU).

The term 3D printable material is further also elucidated below, but especially refers to a thermoplastic material, optionally including additives, to a volume percentage of at maximum about 60%, especially at maximum about 30 vol.%, such as at maximum 20 vol.% (of the additives relative to the total volume of the thermoplastic material and additives).

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture is especially not larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material especially refers to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

As indicated above, especially the 3D printable material (or the 3D printed material) comprises light transmissive material. More especially, the 3D printable material (or the 3D printed material) comprises in embodiments light transmissive polymeric thermoplastic material. In specific embodiments, the light transmissive polymeric thermoplastic material may be transparent for visible light having a one or more wavelengths selected from the range of 450-650 nm.

The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989). In specific embodiments, a material may be considered transmissive when the transmission of the radiation at a wavelength or in a wavelength range, especially at a wavelength or in a wavelength range of radiation generated by a source of radiation as herein described, through a 1 mm thick layer of the material, especially even through a 5 mm thick layer of the material, under perpendicular irradiation with said radiation is at least about 20%, such as at least 40%, like at least 60%, such as especially at least 80%, such as at least about 85%, such as even at least about 90%. The transmission of the light transmissive material for one or more luminescence wavelengths may be at least 80%/cm, such as at least 90%/cm, even more especially at least 95%/cm, such as at least 98%/cm, such as at least 99%/cm. This implies that e.g. a 1 cm³ cubic shaped piece of light transmissive material, under perpendicular irradiation of radiation having a selected luminescence wavelength (such as a wavelength corresponding to an emission maximum of the luminescence of the luminescent material of the light transmissive material), will have a transmission of at least 95%. Herein, values for transmission especially refer to transmission without taking into account Fresnel losses at interfaces (with e.g. air). Hence, the term "transmission" especially refers to the internal transmission. The internal transmission may e.g. be determined by measuring the transmission of two or more bodies having a different width over which the transmission is measured. Then, based on such measurements the contribution of Fresnel reflection losses and (consequently) the internal transmission can be determined. Hence, especially, the values for transmission indicated herein, disregard Fresnel losses.

The light transmissive material may show transmittance at least one wavelength range in the visible light. Especially, the light transmissive material also shows transmittance at least one wavelength range in the visible light and at the same time light is transmitted eventually with forward scattering with substantially no back scattering (only interface reflections). In the most preferred material show almost no substantial absorption in wavelength range of about 450-650 nm range, and light may be transmitted substantially without scattering. Especially, the light transmissive polymeric material is transparent for visible light over the entire wavelength range of 450-650 nm.

Especially, in embodiments the 3D printable material comprises in embodiments light transmissive polymeric thermoplastic material essentially without reflective particulate material embedded therein.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material is deposited, by which the 3D printed item is generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc... Post-processing may include smoothening the ribbed structures, which may lead to an essentially smooth surface.

Further, the invention relates to a computer program product that can be used to execute the method described herein. Therefore, in yet a further aspect the invention also provides a computer program product comprising instructions which, when the computer program product is executed by a computer which is functionally coupled to or comprised by a fused deposition modelling 3D printer, causes the fused deposition modelling 3D printer to carry out the method as described herein.

Hence, in an aspect the invention (thus) provides a computer program product, which, when on the computer program product is executed by a computer which is functionally coupled to or comprised by a fused deposition modelling 3D printer causes the fused deposition modelling 3D printer to carry out (one or more embodiments of) the method (for producing a 3D item by means of fused deposition modelling) as described herein.

The herein described method provides 3D printed items. Hence, the invention also provides in a further aspect a 3D printed item obtainable with the herein described method.

In a further aspect a 3D printed item obtainable with the herein described method is provided. Especially, the invention provides a 3D item comprising 3D printed material. Especially, the 3D item comprises a plurality of layers of 3D printed material. Each layer has a layer height (H) and a layer width (W). Especially, the 3D item comprises a stack of the layers of the 3D printed material. In specific embodiments, at a fixed first x,y-position for a subset of a total number of layers the layer height (H) varies layer by layer. Especially, in embodiments either (i) the layer height (H) increases for consecutive layers or (ii) the layer height (H) decreases for consecutive layers. Even more especially, in embodiments either (i) the layer height (H) increases for consecutive layers and then the layer height (H) decreases for consecutive layers, or (ii) the layer height (H) decreases for consecutive layers and then the layer height (H) increases for consecutive layers. Further, as also indicated above, in specific embodiments at least part of the 3D printed material comprises light transmissive polymeric thermoplastic material.

Therefore, especially the invention (further) provides a 3D item comprising a stack of layers of a 3D printed material, at least part of the 3D printed material comprising a light transmissive polymeric thermoplastic material, wherein each layer of the stack has a non-constant layer height (H), and wherein at a fixed first x,y-position either (i) the layer height (H) increases for consecutive layers and then the layer height (H) decreases for consecutive layers, or (ii) the layer height (H) decreases for consecutive layers and then the layer height (H) increases for consecutive layers.

The 3D printed item may comprise a plurality of layers on top of each other, i.e. stacked layers. The width (thickness) and height of (individually 3D printed) layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

Some specific embodiments in relation to the 3D printed item have already been elucidated above when discussing the method. Below, some specific embodiments in relation to the 3D printed item are discussed in more detail.

As indicated above, in specific embodiments the stack may have a first stack height (H11) at the fixed first x,y position, wherein at a fixed second x,y-position the layers of the stack have a constant layer height (H), wherein the stack has a second stack height (H12) at the fixed second x,y position, wherein 0.1≤H12/H11≤10. However, in other embodiments the stack may have a first stack height (H11) at the fixed first x,y position, wherein at a fixed second x,y-position the layers of the stack have a constant layer height (H), wherein the stack has a second stack height (H12) at the fixed second x,y position, wherein especially 0.9≤H12/H11≤1.1.

Further, in specific embodiments the layers for the subset of a total number of layers at the fixed first x,y position may have a constant layer width (W). However, as indicated above in other embodiments the layer width may also vary over the layers when the layer height varies.

The variation of the layer height may be gradually. Especially, for a subset of a total number of layers at the fixed first x,y-position with layer heights that vary along the surface of the object gradually, the layer height variation may be conform a mathematical function such as sinusoidally or triangularly. Hence, in specific embodiments for the subset of a total number of layers at the fixed first x,y-position the layer heights (H) vary sinusoidally or vary triangularly. In specific embodiments, for a subset of a total number of layers at the fixed first x,y-position the layer heights (H) may vary according to a mathematical function selected from the group consisting of sinusoidally, triangularly, saw tooth, and square, or a combination of two or more of these.
Especially, differences in height between two consecutive layers may in embodiments not be more than about 2.5 mm, such as selected from the range of 0. 1-2.0 mm.

In specific embodiments, the 3D printed material comprise one or more of polycarbonate (PC), polyethylene (PE), polypropylene (PP), polyethylene naphthalate (PEN), styrene-acrylonitrile resin (SAN), polysulfone (PSU), polyphenylene sulfide (PPS), polytethylene terephthalate (PET), poly(methyl methacrylate) (PMMA), polystyrene (PS), styrene acrylic copolymers (SMMA), and polyurethane (PU). In yet further specific embodiments, the 3D printed material comprises light transmissive polymeric thermoplastic material.

Further, in specific embodiments the light transmissive polymeric thermoplastic material comprises particulate reflective material embedded therein. In yet other embodiments, the light transmissive polymeric thermoplastic material does not comprise particulate reflective material embedded therein. In yet further embodiments, one or more layers comprise the light transmissive polymeric thermoplastic material with particulate reflective material embedded therein, and one or more other layers comprise the light transmissive polymeric thermoplastic material essentially without particulate reflective material embedded therein.

The (with the herein described method) obtained 3D printed item may be functional *per se.* For instance, the 3D printed item may be a lens, a collimator, a reflector, etc... The thus obtained 3D item may (alternatively) be used for decorative or artistic purposes.

In specific embodiments, the 3D item is a hollow 3D item. In specific embodiments, the 3D item is a concave 3D item. Further, especially in embodiments the stack is a single wall stack.

The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific embodiments the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc... In embodiments, the 3D item may be configured as shade. A device or system may comprise a plurality of different 3D printed items, having different functionalities.

Returning to the 3D printing process, a specific 3D printer may be used to provide the 3D printed item described herein. Therefore, in yet a further aspect the invention also provides a fused deposition modeling 3D printer, comprising (a) a printer head comprising a printer nozzle, and (b) a 3D printable material providing device configured to provide 3D printable material to the printer head, wherein the fused deposition modeling 3D printer is configured to provide said 3D printable material, wherein in a controlling mode the 3D printer is configured to generate a stack of layers of the 3D printed material, wherein at a fixed first x,y-position the layer height (H) is varied layer by layer for a subset of a total number of layers, wherein either (i) the layer height (H) increases for consecutive layers or (ii) the layer height (H) decreases for consecutive layers. Especially, in the controlling mode either (i) the layer height (H) increases for consecutive layers and then the layer height (H) decreases for consecutive layers, or (ii) the layer height (H) decreases for consecutive layers and then the layer height (H) increases for consecutive layers.

The printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate, wherein in a controlling mode the 3D printer is configured to generate a stack of layers of the 3D printed material, wherein at a fixed first x,y-position the layer height (H) is varied layer by layer for a subset of a total number of layers, wherein either (i) the layer height (H) increases for consecutive layers or (ii) the layer height (H) decreases for consecutive layers. Especially, in the controlling mode either (i) the layer height (H) increases for consecutive layers and then the layer height (H) decreases for consecutive layers, or (ii) the layer height (H) decreases for consecutive layers and then the layer height (H) increases for consecutive layers.

Especially, at least part of the 3D printable material - chosen during the 3D printing process - comprises light transmissive polymeric thermoplastic material.

Especially, the 3D printer comprises a controller (or is functionally coupled to a controller) that is configured to execute in a controlling mode (or "operation mode") the method as described herein. Instead of the term "controller" also the term "control system" (see e.g. above) may be applied.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system.

Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Figs. 2a-2d schematically depict some embodiments;
Figs. 3a-3c schematically depict some further embodiments and aspects;
Fig. 4 schematically depicts an application; and
Figs. 5a-5c show some examples. The schematic drawings are not necessarily to scale.

### DETAILED DESCRIPTION OF THE EMBODIMENTS

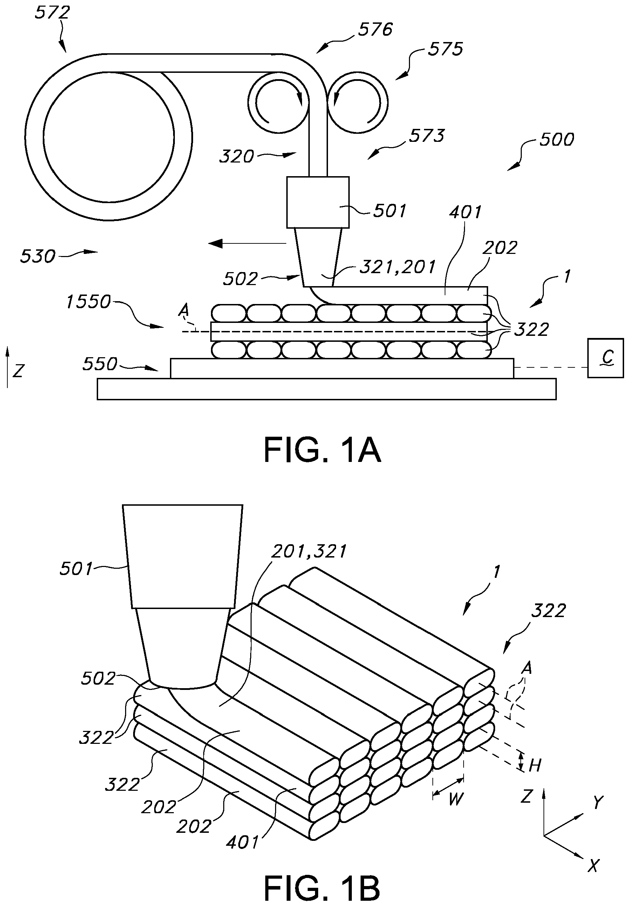

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads (see below). Reference 502 indicates a printer nozzle. The 3D printer of the present invention may especially include a plurality of printer nozzles, though other embodiments are also possible. Reference 320 indicates a filament of printable 3D printable material (such as indicated above). For the sake of clarity, not all features of the 3D printer have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layers 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 322 upstream of the printer head 501. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference A indicates a longitudinal axis or filament axis.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may in embodiments be the case. Reference H indicates the height of a layer. Layers are indicated with reference 203. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202, respectively. Directly downstream of the nozzle 502, the filament 321 with 3D printable material becomes, when deposited, layer 322 with 3D printed material 202.

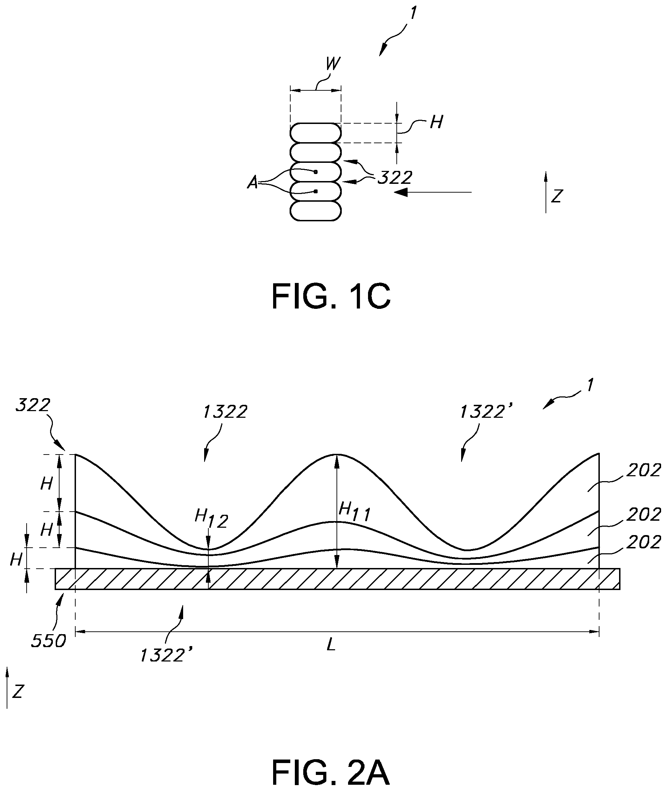

Fig. 1c schematically depicts a stack of 3D printed layers 322, each having a layer height H and a layer width W. Note that in embodiments the layer width and/or layer height may differ for two or more layers 322. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated. Fig. 1c very schematically depicts a single-walled 3D item 1.

It is interesting to have light sources luminaires and lamp shades having decorative and/or optical effects such as angular dependent light scattering, light absorption and light transmission. It is (thus) also interesting to have visual effects in decorative luminaires such as enhanced light reflection. In the case of transparent luminaires, it may be interesting to create (decorative) optical effects. It may also be interesting to have (decorative) wavy features at e.g. the edges of lamp shade (skirt) instead of it being straight.

For this purpose, we suggest amongst others using fused deposition modelling where the height of the deposited layer can be changed during printing. For example, layer height during the printing of each layer can change about a sinus function. When multiple layers are printed where the relative heights change increases, a wavy edge of the print is realized which can be very decorative. When printing continues and relative heights change during printing is decreased to reach a level that during printing no height change takes place structures showing lens working can be realized. It is also possible to use other functions such as saw tooth and other functions. In this way it is also possible to produce lamp shades with edges according to the function used such as wavy, saw teeth or triangular. Printed object does not to have straight surfaces, but their surface can be conical, spherical or have bent. It goes without saying that it is also possible to use height variation only in certain parts of the print while the rest of the object is printed using a constant layer height. In this way various optical effects such as lensing but also spatially varying diffraction effects can be realized.

During printing the printer head moves in XY plane to deposit a layer subsequently the platform moves down, and the following layer is printed. In this way of printing the layer height stays constant during the whole printing process. Amongst others, herein we suggest changing the layer height during printing by enabling the movement of the printing platform along the z axis as schematically shown in Fig. 2a. Fig. 2a is a schematically representation of a side view of e.g. a possible wall. Hence, in embodiments we suggest using fused deposition modelling where the height of the deposited layer can be changed during printing. For example, layer height during the printing of each layer can change about a sinus function. When multiple layers are printed where the relative height change increases, a wavy edge of the print is realized which can - amongst others - be very decorative. This is shown in Fig. 2a. Such shape may also have specific (optical) functionalities.

When printing continues and relative height change during printing more layers is decreased to reach a level that during printing no height change takes place structures showing light refraction based effects such as lens working can be realized. It is also possible to use other functions such as saw tooth and other functions. In this way it is also possible to produce lamp shades with edges according to the function used such as wavy, saw teeth or triangular. Printed object does not to have straight surfaces, but their surface can be conical, spherical or have bent. It goes without saying that it is also possible to use height variation only in certain parts of the print while the rest of the object is printed using a constant layer height.

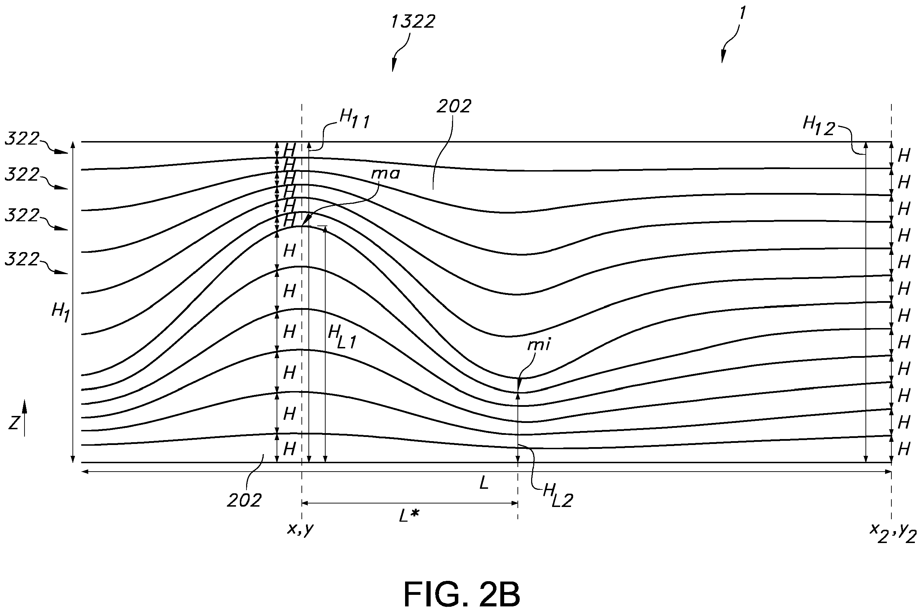

Fig. 2a schematically depicts an embodiment wherein the height variations are not (fully) compensated, leading to variation in the total height (see the lower height at reference H12 and the higher height at reference H11). Fig. 2b, however, shows schematically an embodiment wherein the height variation is compensated. Hence, the total height is essentially constant. The lower height at reference H12 and the higher height at reference H11 may in embodiments refer to the height of the stack, or a part of the stack 1322.

Referring to Figs. 2a-2b and also Figs. 1a-1c, amongst others the invention provides a method for producing a 3D item 1 by means of fused deposition modelling. Such method may comprise a 3D printing stage comprising layer-wise depositing an extrudate from 3D printable material, to provide the 3D item 1 comprising 3D printed material 202 (on a receiver item 550). The 3D item 1 comprises a plurality of layers 322 of 3D printed material 202. Each layer 322 has a layer height H and a layer width W, of which one or more may vary along the layer. Hence, in embodiments the 3D printing stage may comprise generating a stack 1322 of the layers 322 of the 3D printed material 202, wherein at a fixed first x,y-position the layer height H is varied layer by layer for a subset of a total number of layers 322. In embodiments, the stack 1322 may be a single wall stack. This first x,y position is indicated with x1,y1 in Fig. 2b. The layer height H may increase for consecutive layers 322 and/or the layer height H may decrease for consecutive layers 322. Hence, in specific embodiments either (i) the layer height H increases for consecutive layers 322 and then the layer height H decreases for consecutive layers 322 (see at x1y1), or (ii) the layer height H decreases for consecutive layers and then the layer height H increases for consecutive layers 322 (effectively left and right of the first x,y position).

Referring to Fig. 2a, the stack 1322 has a first stack height H11 at the fixed first x,y position. The method may comprises generating at a fixed second x,y-position the stack 1322 with layers 322 having a layer height H, thereby providing the stack 1322 with a second stack height H12 at the fixed second x,y position, wherein 0.1≤H12/H11≤10, such as 0.1≤H12/H11≤5, like 0.2≤H12/H11≤5, with in embodiments at least 0.1≤H12/H11≤1.5. Referring to Fig. 2b, however, the stack 1322 has a first stack height H11 at the fixed first x,y position, wherein the method comprises generating at a fixed second x,y-position the stack 1322 with layers 322 having an essentially constant layer height H, thereby providing the stack 1322 with a second stack height H12 at the fixed second x,y position, wherein e.g. 0.9≤H12/H11≤1.1.

Referring to Figs. 2a and 2b, the stack 1322 may especially share the same layers 322. Hence, a lowest layer and a highest layer of the stack will define the stack height. This stack height may vary over the stack (length) (see Fig. 2a), thought this stack height may also be essentially constant over the stack length (see Fig. 2b).

Further, referring to Figs. 2a-2b a layer from the stack 1322 has a maximum overall height (H_{L1}) of the layer in the stack, wherein the method comprises generating (adjacently) the same layer with a minimum overall height (H_{L2}) of the layer in the stack, wherein |H_{L1}- H_{L2}|/L^{∗} ≤1, where L* is a distance between these two points measured along a surface of the 3D item, especially parallel to the layers 322, such as especially parallel to an x,y plane. Further, in specific embodiments, stacks may be provided wherein values between minima and (adjacent) maxima are achieved selected from the range of 0.1≤|H_{L1}- H_{L2}|/L^{∗}≤1, such as 0.25≤|H_{L1}- H_{L2}|/L^{∗}≤0.8. Here, the minimum and maximum overall heights are defined relative to a lowest layer or a planar layer, that may be available on or may have been available on a receiver item. By way of example, for a specific layer, here the minimum mi and the maximum are indicated. For that layer, the height difference between the minimum mi and the maximum is largest.

Referring to Fig. 2a. the stack 1322 comprises two essentially the same stack parts 1322'.

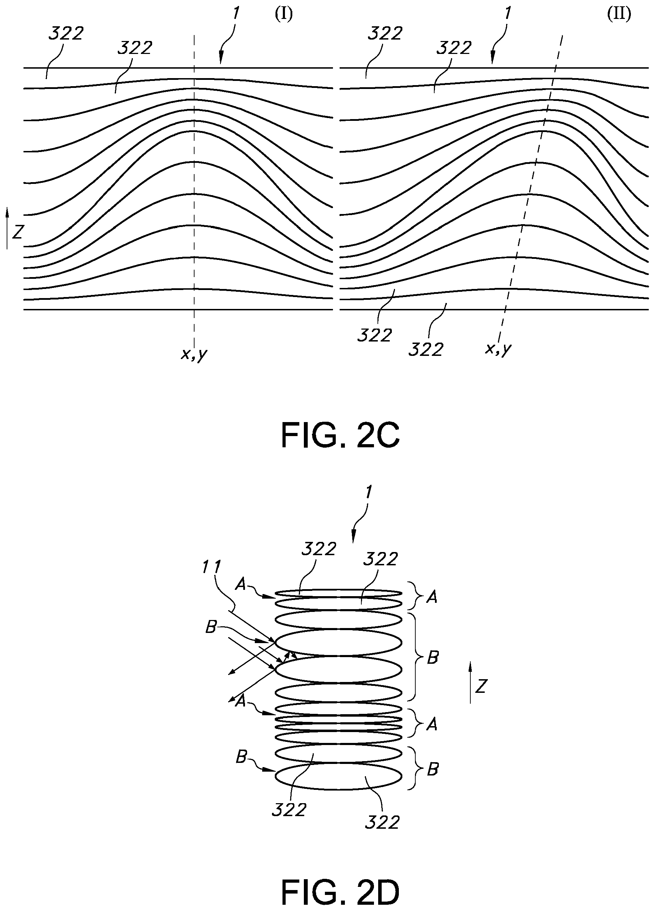

The layer height changes over the height of the segment may vary in different ways (see also below). In embodiments, the (waveform) amplitudes are aligned along the printing direction or along a line that extends at an angle to the printing direction. This is schematically depicted in Fig. 2c. The amplitudes are either aligned along the printing direction (i.e. they are directly on top of each other, see I) or they are shifted along the printing direction (see II).

Depth perception can be divided into monocular and binocular cues, where the former has the benefit that the observer's position and orientation does not depend so much on the depth perceived and therefor does not require extensive addressing. The monocular cues that are described in this proposal are based on texture gradient and contrast. Conventional 3d printing may create surfaces using regular spaced layer height. In case layer heights are varied during the print process then this may be applied for different print sections. Amongst others, a printing method in vase (aka spiral) mode is proposed that creates layer height variations in both z and circumferential direction that in turn results in an omnidirectional depth perception in reflection for an otherwise perfectly plane surface illuminated by ambient lighting, while it also can have impact the perception of how the active illumination from the inside when turned on.

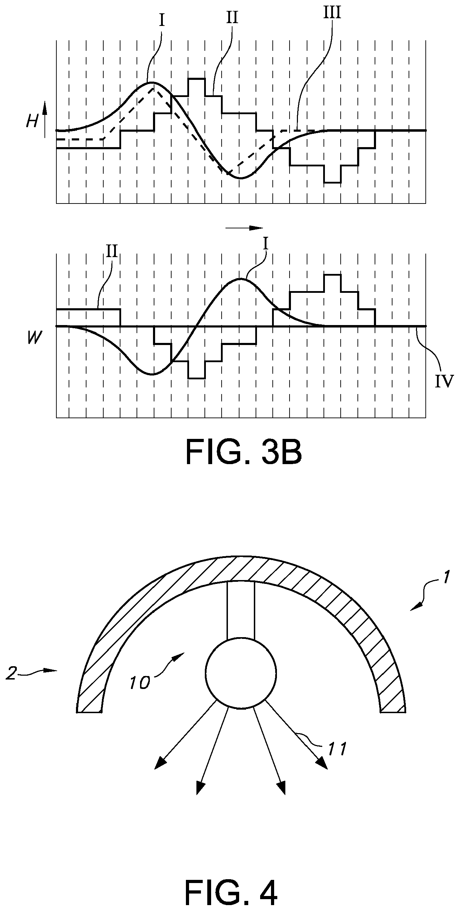

In Fig. 2d the depth perception is explained using texture gradient that results from the brightness variations related to the elliptical shape of the print tracks. Here the layer height is varied in the z direction only. The variation in layer height result in variation in brightness: small layer heights, indicated with A, yield a rapidly alternation between high and low brightness surface areas that effectively results in a nearly uniform surface brightness: One is unable to identify the individual dark and bright contributions. Large layer heights, indicated with B, yield a low frequency alternation between high and low brightness such that one can clearly distinguish to individual components to the surface brightness when looking close to the texture. Light that impinges on the item 1 is indicated with reference 11. This may e.g. be light source light (see Fig. 4), but this may also be daylight.

To obtain texture variation in circumferential direction one may need to vary the layer height within the layer. In order to create a uniform luminaire wall thickness without cavities, i.e. constant track width, one may require compensating both the extrusion and the z coordinate during printing. As in such configuration the z-coordinate also depends on the layer heights below the predefined position, one may need to consider these previous layer heights directly beneath that position. This is in distinct contrast with conventional 3d printing where during printing of a single revolution the z coordinate may be confined to either a constant position or in case of spiral mode within one-layer height.

Different items were made. The high frequency texture appears much brighter than the low frequency one: the layers in the high frequency texture are thinner and therefore the low brightness surface area within these layers contributed less to the average brightness in that region. In the low frequency texture, the low brightness areas constitute much more to the average brightness and as a result they appear darker. Also embodiments were created wherein one can immediately identify that the low frequency texture is in fact more transparent as opposed to the high frequency texture that is more Lambertian scattering. Clearly the modulation in transmissivity closely depends on the optical properties of the filament choice of material. Embodiments where made wherein even the layer height variations (and hence the variation in texture) are not directly visible from the distance where the picture was taken, it is the difference in reflectivity of the ambient light that gives the depth impression.

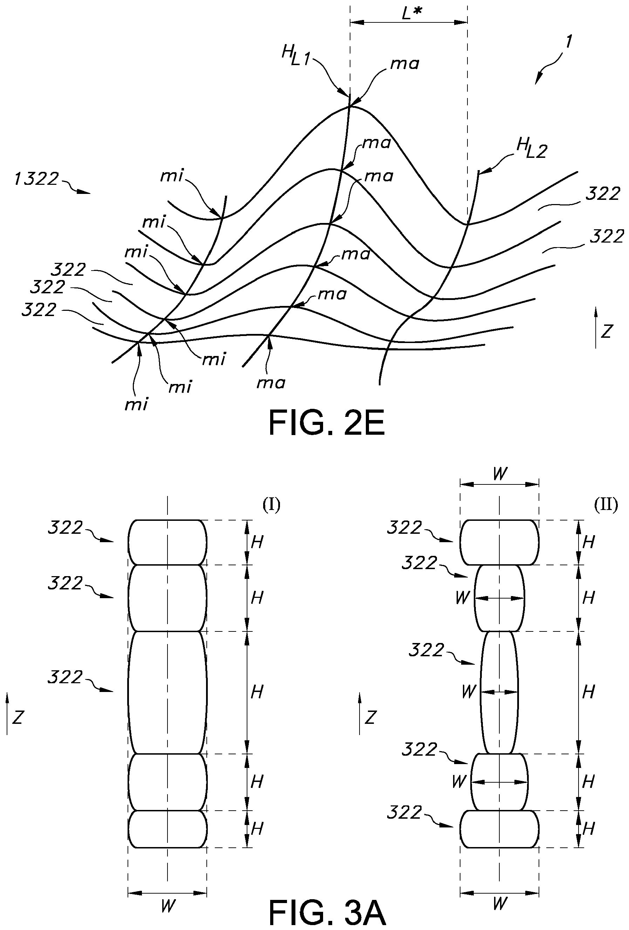

As can be seen in Fig 2e the positions of maxima (indicted with ma) and minima (indicated with mi) and in layers can follow a curve which is in the form of a spiral on the surface such as a helix creating decorative effects.

Referring to e.g. Figs. 2c and 2e, the increase of the layer height may be essentially parallel to the z-direction. In yet other embodiments, the increase may be under an angle (smaller than 90°, such as equal to or smaller than 45°) to the z-direction. Likewise, in embodiments the decrease may be essentially parallel to the z-direction. In yet other embodiments, the decrease may be under an angle (smaller than 90°, such as equal to or smaller than 45°) to the z-direction.

Fig. 3a schematically depict two possible cross-sectional views. In both embodiments, the layer height H varies over the height. In the left embodiment, indicated with I, the layer width W is essentially kept constant. In the right embodiment, indicated with II, the layer width also varies. Hence, in embodiments the layers 322 for the subset of a total number of layers 322 at the fixed first x,y position may have an essentially constant layer width W. However, in other embodiments the subset of a total number of layers 322 at the fixed first x,y position may have a cross-sectional area of the layers 322 that is constant.

As indicated above, in embodiments the method comprises printing the layers 322 for the subset of a total number of layers 322 at the fixed first x,y-position with layer heights H that vary sinusoidally or triangularly. Alternatively, in embodiments the method may comprise printing the layers 322 for the subset of a total number of layers 322 at the fixed first x,y-position with layer heights H that vary like a sawtooth. For instance, in embodiments the method may comprise printing the layers 322 for the subset of a total number of layers 322 at the fixed first x,y-position with stack heights that vary along the surface of the object gradually according to a mathematical function such as sinusoidally or triangularly. Fig. 3b schematically depicts in the upper graph some possibilities for the layer height, such as sinusoidal (I), saw tooth (II), and step wise (III). Note that in the latter embodiments, it is also taken into account that not each next layer should have a different layer height H. On the x-axis, the layers are indicated. In the lower graph of Fig. 3b, possible layer widths are schematically depicted. The sinusoidal layer height may in embodiments be compensated with an inverse sinusoidal layer width (I). However, in embodiments the layer width may also be chosen constant (IV)(see also Fig. 3a, embodiment I). Curve II in the top and bottom figure of Fig. 3b are also used as embodiment to show that layer height and layer width may be controlled such, that essentially the cross-sectional area stays constant. However, as indicated with curve IV, the width may also be kept constant, or partly be used to compensate for the increased or decreased layer height. These drawings are very schematically.

Hence, especially at least part of the 3D printable material 201 comprises light transmissive polymeric thermoplastic material 401. In embodiments, the 3D printable material 201 and the 3D printed material 202 comprise one or more of polycarbonate PC, polyethylene PE, polypropylene PP, polyethylene naphthalate PEN, styrene-acrylonitrile resin SAN, polysulfone PSU, polyphenylene sulfide PPS, polytethylene terephthalate PET, polymethyl methacrylate PMMA, polystyrene PS, and styrene acrylic copolymers SMMA polyurethane (PU).

As schematically depicted in Fig. 3c in embodiments the light transmissive polymeric thermoplastic material 401 comprises particulate reflective material 410 embedded therein.

Fig. 4 schematically depicts an embodiment of a lamp or luminaire, indicated with reference 2, which comprises a light source 10 for generating light 11. The lamp may comprise a housing or shade or another element, which may comprise or be the 3D printed item 1. Here, the half sphere (in cross-sectional view) schematically indicates a housing or shade. The lamp or luminaire may be or may comprise a lighting device 1000 (which comprises the light source 10). Hence, in specific embodiments the lighting device 1000 comprises the 3D item 1. The 3D item 1 may be configured as one or more of (i) at least part of a lighting device housing, (ii) at least part of a wall of a lighting chamber, and (iii) an optical element. Hence, the 3D item may in embodiments be reflective for light source light 11 and/or transmissive for light source light 11. Here, the 3D item may e.g. be a housing or shade. The housing or shade comprises the item part 400. For possible embodiments of the item part 400, see also above.

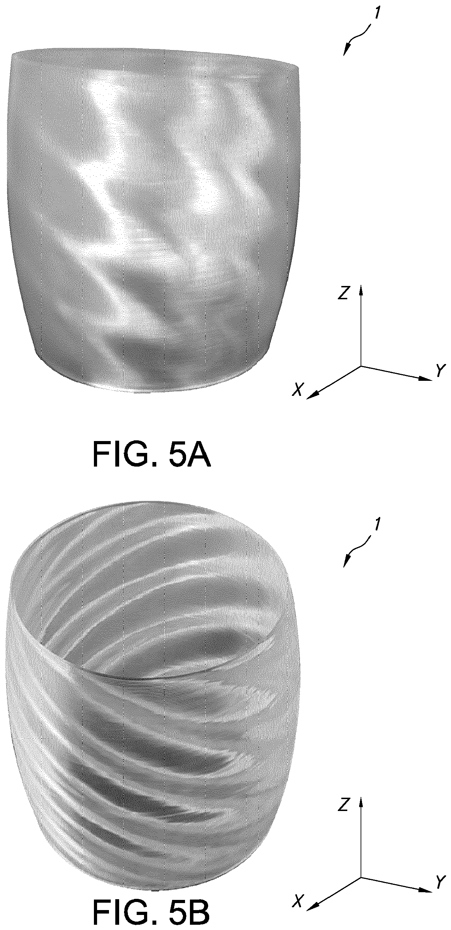

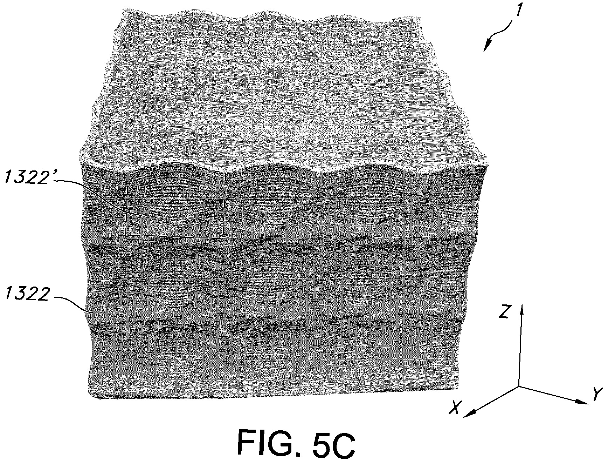

Figs. 5a-5b depict pictures of possible luminaire housings. A depth impression is obtained using layer height variation in both the z and the circumferential direction. Note that the overall contour is only smoothly varying and is essentially constant. In specific embodiments, the method may comprise printing a concave 3D item 1. Fig. 5c shows a picture of a 3D item obtainable by e.g. varying the layer height during the printing of each layer can change about a sinus function. When multiple layers are printed where the relative height change increases, a wavy edge of the print may be realized. Figs. 5a-5c also schematically depict that a stack 1322 may also comprise a plurality of (smaller) stacks. Referring to Fig. 5c. the stack 1322 comprises a plurality of essentially the same stack parts 1322'. Hence, a stack may comprise multiple smaller stacks which may in embodiments be configured in a regular pattern.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

It goes without saying that one or more of the first (printable or printed) material and second (printable or printed) material may contain fillers such as glass and fibers which do not have (to have) influence on the on T_{g} or Tₘ of the material(s).

## Claims

1. A method for producing a 3D item (1) by means of fused deposition modelling using a 3D printer, the method comprising a 3D printing stage during which a stack (1322) of layers (322) of a 3D printed material (202) is generated by layer-wise depositing an extrudate (321) from 3D printable material (201), at least part of the 3D printable material (201) comprising a light transmissive polymeric thermoplastic material (401),
wherein each layer (322) of the stack (1322) has a non-constant layer height (H),
wherein at a fixed first x,y-position:
(i) the layer height (H) increases for consecutive layers (322) and then the layer height (H) decreases for consecutive layers (322), or
(ii) the layer height (H) decreases for consecutive layers and then the layer height (H) increases for consecutive layers (322),
wherein the stack (1322) has a first stack height (H11) at the fixed first x,y position, and
wherein the method comprises generating at a fixed second x,y-position the stack (1322) with layers (322) having a layer height (H), thereby providing the stack (1322) with a second stack height (H12) at the fixed second x,y position, wherein 0.9≤H12/H11≤1.1.

2. The method according to claim 1, wherein a layer (322) from the stack (1322) has a maximum overall height (H_{L1}), wherein the method comprises generating the same layer (322) with a minimum overall height (H_{L2}) of that layer in the stack, wherein |H_{L1}-H_{L2}|/L^{∗}≤1, where L* is a distance between these two points measured parallel to an x,y-plane.

3. The method according to claim 2, comprising 3D printing a plurality of maximum overall heights (H_{L1}) and minimum overall heights (H_{L2}) in the stack (1322), where the maximum overall heights (H_{L1}) and minimum overall heights (H_{L2}) of each layer follow a spiral on a surface of the 3D item (1), and wherein the method comprises printing a concave 3D item (1).

4. The method according to any one of the preceding claims, wherein the method comprises printing the layers (322) for the subset of a total number of layers (322) at the fixed first x,y position with a constant layer width (W).

5. The method according to any one of the preceding claims, wherein the method comprises printing the layers (322) for the subset of a total number of layers (322) at the fixed first x,y-position with layer heights (H) that vary according to a mathematical function selected from the group consisting of sinusoidally, triangularly, saw tooth, and square, or a combination of two or more of these.

6. The method according to any one of the preceding claims, wherein the light transmissive polymeric thermoplastic material (401) is transparent for visible light having a one or more wavelengths selected from the range of 450-650 nm.

7. The method according to any one of the preceding claims, wherein the 3D printable material (201) and the 3D printed material (202) comprise one or more of polycarbonate (PC), polyethylene (PE), polypropylene (PP), polyethylene naphthalate (PEN), styrene-acrylonitrile resin (SAN), polysulfone (PSU), polyphenylene sulfide (PPS), polytethylene terephthalate (PET), poly(methyl methacrylate) (PMMA), polystyrene (PS), styrene acrylic copolymers (SMMA), and polyurethane (PU).

8. A 3D item (1) comprising a stack (1322) of layers (322) of a 3D printed material (202), at least part of the 3D printed material (202) comprising a light transmissive polymeric thermoplastic material (401),
wherein each layer (322) of the stack (1322) has a non-constant layer height (H),
wherein at a fixed first x,y-position:
(i) the layer height (H) increases for consecutive layers (322) and then the layer height (H) decreases for consecutive layers (322), or
(ii) the layer height (H) decreases for consecutive layers and then the layer height (H) increases for consecutive layers (322),
wherein the stack (1322) has a first stack height (H11) at the fixed first x,y position, and
wherein at a fixed second x,y-position the layers (322) of the stack (1322) have a constant layer height (H), wherein the stack (1322) has a second stack height (H12) at the fixed second x,y position, wherein 0.1≤H12/H11≤10.

9. The 3D item (1) according to claim 8, wherein 0.9≤H12/H11≤1.1; and wherein the layers (322) for the subset of a total number of layers (322) at the fixed first x,y position have a constant layer width (W).

10. The 3D item (1) according to any one of the preceding claims 8-9, wherein for the subset of a total number of layers (322) at the fixed first x,y-position the layer heights (H) vary sinusoidally or vary triangularly; wherein the 3D item (1) is a concave 3D item (1); wherein the stack (1322) is a single wall stack.

11. The 3D item (1) according to any one of the preceding claims 8-10, wherein the 3D printed material (202) comprise one or more of polycarbonate (PC), polyethylene (PE), polypropylene (PP), polyethylene naphthalate (PEN), styrene-acrylonitrile resin (SAN), polysulfone (PSU), polyphenylene sulfide (PPS), polytethylene terephthalate (PET), poly(methyl methacrylate) (PMMA), polystyrene (PS), styrene acrylic copolymers (SMMA), and polyurethane (PU), wherein the 3D printed material (202) comprises light transmissive polymeric thermoplastic material (401).

12. A lighting device (1000) comprising the 3D item (1) according to any one of the preceding claims 8-11, wherein the 3D item (1) is configured as one or more of (i) at least part of a lighting device housing, (ii) at least part of a wall of a lighting chamber, and (iii) an optical element.

13. A computer program product comprising instructions which, when the computer program product is executed by a computer which is functionally coupled to or comprised by a fused deposition modelling 3D printer, causes the fused deposition modelling 3D printer to carry out the method as described in any one of the preceding claims 1-7.

## Patentansprüche

1. Verfahren zum Herstellen eines 3D-Elements (1) mittels Schmelzschichtung unter Verwendung eines 3D-Druckers, wobei das Verfahren eine 3D-Druckstufe umfasst, während der ein Stapel (1322) von Schichten (322) eines 3D-gedruckten Materials (202) durch schichtweises Abscheiden eines Extrudats (321) aus 3D-druckbarem Material (201) erzeugt wird, wobei mindestens ein Teil des 3D-druckbaren Materials (201) ein lichtdurchlässiges thermoplastisches Polymermaterial (401) umfasst,
wobei jede Schicht (322) des Stapels (1322) eine nicht-konstante Schichthöhe (H) aufweist,
wobei an einer festen ersten x,y-Position:
(i) die Schichthöhe (H) für aufeinanderfolgende Schichten (322) zunimmt und dann die Schichthöhe (H) für aufeinanderfolgende Schichten (322) abnimmt, oder
(ii) die Schichthöhe (H) für aufeinanderfolgende Schichten abnimmt und dann die Schichthöhe (H) für aufeinanderfolgende Schichten (322) zunimmt,
wobei der Stapel (1322) eine erste Stapelhöhe (H11) an der festen ersten x,y-Position aufweist, und
wobei das Verfahren das Erzeugen des Stapels (1322) mit Schichten (322), die eine Schichthöhe (H) aufweisen, an einer festen zweiten x,y-Position umfasst, wodurch der Stapel (1322) mit einer zweiten Stapelhöhe (H12) an der festen zweiten x,y-Position bereitgestellt wird, wobei 0,9≤H12/H11≤1,1.

2. Verfahren nach Anspruch 1, wobei eine Schicht (322) aus dem Stapel (1322) eine maximale Gesamthöhe (HL1) aufweist, wobei das Verfahren das Erzeugen derselben Schicht (322) mit einer minimalen Gesamthöhe (HL2) dieser Schicht im Stapel umfasst, wobei |HL1- HL2|/L*≤1, wobei L* ein parallel zu einer x,y-Ebene gemessener Abstand zwischen diesen beiden Punkten ist.

3. Verfahren nach Anspruch 2, umfassend das 3D-Drucken einer Vielzahl von
maximalen Gesamthöhen (H_{L1}) und minimalen Gesamthöhen (H_{L2}) in dem Stapel (1322), wobei die maximalen Gesamthöhen (H_{L1}) und die minimalen Gesamthöhen (H_{L2}) jeder Schicht einer Spirale auf einer Oberfläche des 3D-Elements (1) folgen, und wobei das Verfahren das Drucken eines konkaven 3D-Elements (1) umfasst.

4. Verfahren nach einem der vorstehenden Ansprüche, wobei das Verfahren das Drucken der Schichten (322) für die Teilmenge einer Gesamtanzahl von Schichten (322) an der festen ersten x,y-Position mit einer konstanten Schichtbreite (W) umfasst.

5. Verfahren nach einem der vorstehenden Ansprüche, wobei das Verfahren das Drucken der Schichten (322) für die Teilmenge einer Gesamtanzahl von Schichten (322) an der festen ersten x,y-Position mit Schichthöhen (H) umfasst, die gemäß einer mathematischen Funktion variieren, ausgewählt aus der Gruppe bestehend aus sinusförmig, dreieckig, sägezahnförmig und quadratisch oder einer Kombination von zwei oder mehreren von diesen.

6. Verfahren nach einem der vorstehenden Ansprüche, wobei das lichtdurchlässige polymere thermoplastische Material (401) für sichtbares Licht mit einer oder mehreren Wellenlängen, ausgewählt im Bereich von 450-650 nm, transparent ist.

7. Verfahren nach einem der vorstehenden Ansprüche, wobei das 3D-druckbare Material (201) und das 3D-gedruckte Material (202) eines oder mehrere umfasst von Polycarbonat (PC), Polyethylen (PE), Polypropylen (PP), Polyethylennaphthalat (PEN), Styrol-Acrylnitril-Harz (SAN), Polysulfon (PSU), Polyphenylensulfid (PPS), Polyethylenterephthalat (PET), Poly(methylmethacrylat) (PMMA), Polystyrol (PS), Styrol-Acryl-Copolymere (SMMA) und Polyurethan (PU).

8. 3D-Element (1), umfassend einen Stapel (1322) von Schichten (322) eines 3D-gedruckten
Materials (202), wobei mindestens ein Teil des 3D-gedruckten Materials (202) ein lichtdurchlässiges polymeres thermoplastisches Material (401) umfasst,
wobei jede Schicht (322) des Stapels (1322) eine nicht-konstante Schichthöhe (H) aufweist,
wobei an einer festen ersten x,y-Position:
(i) die Schichthöhe (H) für aufeinanderfolgende Schichten (322) zunimmt und dann die Schichthöhe (H) für aufeinanderfolgende Schichten (322) abnimmt, oder
(ii) die Schichthöhe (H) für aufeinanderfolgende Schichten abnimmt und dann die Schichthöhe (H) für aufeinanderfolgende Schichten (322) zunimmt,
wobei der Stapel (1322) eine erste Stapelhöhe (H11) an der festen ersten x,y-Position aufweist, und
wobei an einer festen zweiten x,y-Position die Schichten (322) des Stapels (1322) eine konstante Schichthöhe (H) aufweisen, wobei der Stapel (1322) eine zweite Stapelhöhe (H12) an der festen zweiten x,y-Position aufweist, wobei 0,1≤H12/H11≤10.

9. 3D-Element (1) nach Anspruch 8, wobei 0,9≤H12/H11≤1,1; und wobei die Schichten (322) für die Teilmenge einer Gesamtanzahl von Schichten (322) an der festen ersten x,y-Position eine konstante Schichtbreite (W) aufweisen.

10. 3D-Element (1) nach einem der vorstehenden Ansprüche 8-9, wobei für die Teilmenge einer Gesamtanzahl von Schichten (322) an der festen ersten x,y-Position die Schichthöhen (H) sinusförmig oder dreieckig variieren; wobei das 3D-Element (1) ein konkaves 3D-Element (1) ist;
wobei der Stapel (1322) ein einwandiger Stapel ist.

11. 3D-Element (1) nach einem der vorstehenden Ansprüche 8-10, wobei das 3D-gedruckte Material (202) eines oder mehrere umfasst von Polycarbonat (PC), Polyethylen (PE), Polypropylen (PP), Polyethylennaphthalat (PEN), Styrol-Acrylnitrilharz (SAN), Polysulfon (PSU), Polyphenylensulfid (PPS), Polyethylenterephthalat (PET), Poly(methylmethacrylat) (PMMA), Polystyrol (PS), Styrol-Acryl-Copolymere (SMMA) und Polyurethan (PU), wobei das 3D-gedruckte Material (202) ein lichtdurchlässiges polymeres thermoplastisches Material (401) umfasst.

12. Beleuchtungsvorrichtung (1000), umfassend das 3D-Element (1) nach einem der vorstehenden Ansprüche 8-11, wobei das 3D-Element (1) als eines oder mehrere von (i) mindestens einem Teil eines Beleuchtungsvorrichtungsgehäuses, (ii) mindestens einem Teil einer Wand einer Beleuchtungskammer, und (iii) einem optischen Element konfiguriert ist.

13. Computerprogrammprodukt, umfassend Anweisungen, die, wenn das Computerprogrammprodukt von einem Computer ausgeführt wird, der funktionell mit einem 3D-Drucker für die Schmelzschichtung gekoppelt ist oder aus diesem besteht, den 3D-Drucker für die Schmelzschichtung veranlassen, das Verfahren, wie in einem der vorstehenden Ansprüche 1-7 beschrieben, auszuführen.

## Revendications

1. Procédé de production d'un article 3D (1) au moyen d'une modélisation par dépôt en fusion à l'aide d'une imprimante 3D, le procédé comprenant une étape d'impression en 3D pendant laquelle un empilement (1322) de couches (322) d'un matériau imprimé en 3D (202) est généré par dépôt par couche d'un extrudat (321) à partir d'un matériau imprimable en 3D (201), au moins une partie du matériau imprimable en 3D (201) comprenant un matériau thermoplastique polymère transmettant la lumière (401),
dans lequel chaque couche (322) de l'empilement (1322) a une hauteur de couche non constante (H),
dans lequel, à une première position x,y fixe :
(i) la hauteur de couche (H) augmente pour des couches consécutives (322) et puis la hauteur de couche (H) diminue pour des couches consécutives (322), ou
(ii) la hauteur de couche (H) diminue pour des couches consécutives et puis la hauteur de couche (H) augmente pour des couches consécutives (322),
dans lequel l'empilement (1322) a une première hauteur d'empilement (H11) à la première position x,y fixe, et
dans lequel le procédé comprend la génération à une seconde position x,y fixe de l'empilement (1322) avec des couches (322) ayant une hauteur de couche (H), fournissant ainsi à l'empilement (1322) une seconde hauteur d'empilement (H12) à la seconde position x,y fixe, dans lequel 0,9≤H12/H11≤1,1.

2. Procédé selon la revendication 1, dans lequel une couche (322) de l'empilement (1322 ) a une hauteur globale maximale (H_{L1}), le procédé comprenant la génération de la même couche (322) avec une hauteur globale minimale (H_{L2}) de cette couche dans l'empilement, dans lequel |H_{L1}- H_{L2}|/L*≤1, où L* est une distance entre ces deux points mesurée parallèlement à un plan x,y.

3. Procédé selon la revendication 2, comprenant une impression en 3D d'une pluralité de
hauteurs globales maximales (H_{L1}) et hauteurs globales minimales (H_{L2}) dans l'empilement (1322), où les hauteurs globales maximales (H_{L1}) et hauteurs globales minimales (H_{L2}) de chaque couche suivent une spirale sur une surface de l'article 3D (1), et dans lequel le procédé comprend l'impression d'un article 3D concave (1).

4. Procédé selon l'une quelconque des revendications précédentes, le procédé comprenant l'impression des couches (322) pour le sous-ensemble d'un nombre total de couches (322) à la première position x,y fixe avec une largeur (W) de couche constante.

5. Procédé selon l'une quelconque des revendications précédentes, le procédé comprenant l'impression des couches (322) pour le sous-ensemble d'un nombre total de couches (322) à la première position x,y fixe avec des hauteurs de couche (H) qui varient selon une fonction mathématique choisie dans le groupe constitué de dent de scie de manière sinusoïdale, triangulaire, et carrée, ou d'une combinaison de deux de celles-ci ou plus.

6. Procédé selon l'une quelconque des revendications précédentes, dans lequel le matériau thermoplastique polymère transmettant la lumière (401) est transparent pour la lumière visible ayant une ou plusieurs longueurs d'onde choisies dans la plage de 450 à 650 nm.

7. Procédé selon l'une quelconque des revendications précédentes, dans lequel le matériau imprimable en 3D (201) et le matériau imprimé en 3D (202) comprennent un ou plusieurs parmi les polycarbonate (PC), polyéthylène (PE), polypropylène (PP), naphtalate de polyéthylène (PEN), résine styrène-acrylonitrile (SAN), polysulfone (PSU), sulfure de polyphénylène (PPS), téréphtalate de polytéthylène (PET), poly (méthacrylate de méthyle) (PMMA), polystyrène (PS), copolymères acryliques de styrène (SMMA) et polyuréthane (PU).

8. Article 3D (1) comprenant un empilement (1322) de couches (322) d'un matériau imprimé en 3D
(202), au moins une partie du matériau imprimé en 3D (202) comprenant un matériau thermoplastique polymère transmettant la lumière (401),
dans lequel chaque couche (322) de l'empilement (1322) a une hauteur de couche non constante (H),
dans lequel, à une première position x,y fixe :
(i) la hauteur de couche (H) augmente pour des couches consécutives (322) et puis la hauteur de couche (H) diminue pour des couches consécutives (322), ou
(ii) la hauteur de couche (H) diminue pour des couches consécutives et puis la hauteur de couche (H) augmente pour des couches consécutives (322),
dans lequel l'empilement (1322) a une première hauteur d'empilement (H11) à la première position x,y fixe, et
dans lequel, à une seconde position x,y fixe, les couches (322) de l'empilement (1322) ont une hauteur de couche constante (H), l'empilement(1322) ayant une seconde hauteur d'empilement (H12) à la seconde position x,y fixe, où 0,1≤H12/H11≤10.

9. Article 3D (1) selon la revendication 8, dans lequel 0,9≤H12/H11≤1,1 ; et dans lequel les couches (322) pour le sous-ensemble d'un nombre total de couches (322) à la première position x,y fixe ont une largeur (W) de couche constante .

10. Article 3D (1) selon l'une quelconque des revendications précédentes 8 à 9, dans lequel pour le sous-ensemble d'un nombre total de couches (322) à la première position x,y fixe, les hauteurs de couche (H) varient sinusoïdalement ou varient triangulairement ; dans lequel l'article 3D (1) est un article 3D concave (1) ;
dans lequel l'empilement (1322) est un empilement mural unique.

11. Article 3D (1) selon l'une quelconque des revendications précédentes 8 à 10, dans lequel le matériau imprimé en 3D (202) comprend un ou plusieurs parmi les polycarbonate (PC), polyéthylène (PE), polypropylène (PP), naphtalate de polyéthylène (PEN), résine styrène-acrylonitrile (SAN), polysulfone (PSU), sulfure de polyphénylène (PPS), téréphtalate de polyéthylène (PET), poly (méthacrylate de méthyle) (PMMA), polystyrène (PS), copolymères acryliques de styrène (SMMA), et polyuréthane (PU), dans laquelle le matériau imprimé en 3D (202) comprend un matériau thermoplastique polymère transmettant la lumière (401).

12. Dispositif d'éclairage (1000) comprenant l'article 3D (1) selon l'une quelconque des revendications précédentes 8 à 11, dans lequel l'article 3D (1) est configuré en tant qu'un ou plusieurs parmi (i) au moins une partie d'un logement de dispositif d'éclairage, (ii) au moins une partie d'une paroi d'une chambre d'éclairage, et (iii) un élément optique.

13. Produit programme informatique comprenant des instructions qui, lorsque le
produit programme informatique est exécuté par un ordinateur qui est fonctionnellement couplé à ou inclus par une imprimante 3D à modélisation par dépôt fondu, amène l'imprimante 3D à modélisation par dépôt fondu à effectuer le procédé tel que décrit dans l'une quelconque des revendications précédentes 1 à 7.
